# EUROPEAN PATENT SPECIFICATION

(11) **EP 2 407 972 B1**
(45) Date of publication and mention of the grant of the patent: **15.05.2019**
(21) Application number: 11001690.4
(22) Date of filing: 01.03.2011
(51) Int. Cl.: G11B 27/034, G11B 27/34, G06T 11/60, H04N 5/77, H04N 9/82

(54) **Method for photo editing and mobile terminal using this method**
Verfahren zur Fotobearbeitung und dieses Verfahren nutzendes mobiles Endgerät
Procédé d'édition de photos et terminal mobile utilisant ce procédé

(30) Priority: 12.07.2010 KR 20100067110
(43) Date of publication of application: 18.01.2012
(73) Proprietor: LG Electronics Inc., Yeongdeungpo-gu SEOUL, 07336 (KR)
(72) Inventor: Choi, Kyungdong, Seoul (KR); Yoo, Jeseung, Gwangmyeong Gyeonggi-Do (KR)
(74) Representative: Ter Meer Steinmeister & Partner

(56) References cited:
- JP-A- 8 272 820
- US-A1- 2005 153 746
- US-A1- 2008 089 616

## Description

### BACKGROUND OF THE INVENTION

### 1. Field of the invention

The present disclosure relates to image data processing, and more particularly, to a method for photo editing and a mobile terminal using the same method.

### 2. Description of the related art

Terminals may be divided into mobile/portable terminals and stationary terminals according to their mobility. Also, the mobile terminals may be categorized into a handheld terminal and a vehicle mount terminal according to whether it is directly portable by a user.

US 2008/089616 A1 relates to a method of operating a digital image processing apparatus, and more particularly, an image editing method for a digital image processing apparatus, whereby a plurality of images captured in a continuous shooting mode can be collectively or individually edited. The image editing method is used to operate a digital image processing apparatus, and the image editing method includes: taking photographs in a continuous shooting mode in which a plurality of images are captured by pressing a shutter-release button one time; recognizing the captured images as images captured in the continuous shooting mode; and applying the same editing operation to all of the images recognized as the images captured in the continuous shooting mode. US 2005/153746 A1 relates to a mobile terminal including an image display area and a state display area. The known mobile terminal further includes a storing section for storing at least one image and a list of image files; an image editing section for editing an image; and a control section for displaying one of stored images in whole on the state display area and a browsing curser movable over a predetermined area of the image displayed on the state display area, enlarging a portion confined by the browsing cursor to display the portion on an image display area.

As it becomes multifunctional, the terminal can be allowed to capture still images or moving images, play music or video files, play games, receive broadcast and the like, so as to be implemented as an integrated multimedia player. Various attempts have been done for the terminal by hardware or software in order to support and implement such complicated functions.

In general, a mobile communication terminal is mounted with a portable camera to capture desired images anytime and anywhere as well as support various functions such as transmitting image information, image communication, and the like, in addition to voice communication and text message services. Such communication may be classified into a camera-built-in type in which a camera is incorporated and a camera-attached type in which a camera is separately provided to be used by plugging it into the terminal main body.

However, a mobile communication terminal in the related art merely retrieves a captured image to display an enlarged image thereof or provides simple editing functions for the user's convenience but does not provide the functions for conveniently assorting or deleting a plurality of similar pictures generated through continuous shooting (capturing) by the user. As a result, the user may find it inconvenient to check each picture one by one or compare a plurality of pictures while turning over screens to perform the operation such as selecting and deleting low-quality pictures, and the like.

### SUMMARY OF THE INVENTION

The objective of the present disclosure is to provide a method of allowing the user to conveniently edit or effectively manage a plurality of pictures or images and a mobile terminal using the same method.

Furthermore, the objective of the present disclosure is to provide a method of allowing the user to simultaneously edit or compare, or effectively arrange a plurality of pictures or images and a terminal using the same method.

Said objective has been addressed with the subject-matter of the independent claims. Advantageous embodiments are described in the dependent claims.

In order to implement the foregoing objective, a method of editing pictures in a mobile terminal according to an embodiment of the present disclosure may include discernibly displaying a plurality of similar pictures with a reference picture and a compared picture, receiving an edit command for the displayed reference picture, applying the received edit command similarly to the compared picture, and displaying the execution result of the edit command simultaneously for the reference picture and the compared picture.

In order to implement the foregoing objective, a method of editing pictures in a mobile terminal according to another embodiment of the present disclosure may include determining a reference picture and a compared picture from a plurality of similar pictures, receiving an edit command for the displayed reference picture, applying the received edit command similarly to the compared picture, and displaying the execution result of the edit command for the reference picture and the compared picture at the same time.

In order to implement the foregoing objective, a mobile terminal according to an embodiment of the present disclosure may include a display unit discernibly displaying a plurality of similar pictures with a reference picture and a compared picture, and a controller receiving an edit command for the displayed reference picture, and applying the received edit command similarly to the compared picture, and displaying the execution result of the edit command for the reference picture and the compared picture at the same time.

In order to implement the foregoing objective, a mobile terminal according to another embodiment of the present disclosure may include a controller determining a reference picture and a compared picture from a plurality of similar pictures, and receiving an edit command for the displayed reference picture, and applying the received edit command similarly to the compared picture, and a display unit displaying the execution result of the edit command for the reference picture and the compared picture at the same time.

According to a method of editing pictures and a terminal using the same method according to at least one embodiment of the present disclosure as described above, there is provided a function in which if the user performs enlargement, movement or editing for any one picture (image) in the divided screens, then the same operation is performed for another picture (image), and a plurality of similar pictures generated by continuous shooting (capturing), capturing with a plurality of lenses, or the like, are automatically arranged and displayed based on a certain reference or a specific picture is deleted, thereby allowing the user to conveniently compare, arrange or edit the plurality of pictures (images).

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram of a mobile terminal according to an embodiment of the present disclosure;
FIG. 2 is an exemplary view illustrating that a mobile terminal according to an embodiment of the present disclosure enlarges a reference picture and a compared picture at the same time;
FIG. 3 is an exemplary view illustrating that a mobile terminal according to an embodiment of the present disclosure moves a screen display portion of a reference picture and a compared picture at the same time;
FIG. 4 is an exemplary view illustrating that a mobile terminal according to an embodiment of the present disclosure performs the same editing operation for a reference picture and a compared picture at the same time;
FIG. 5 is an exemplary view illustrating that a mobile terminal according to an embodiment of the present disclosure specifies a portion in which a compared picture is different from a reference picture;
FIG. 6 is an exemplary view illustrating that a mobile terminal according to an embodiment of the present disclosure arranges to display a plurality of pictures according to a predetermined reference;
FIG. 7 is an exemplary view illustrating that a mobile terminal according to an embodiment of the present disclosure changes the names of a plurality of pictures according to a predetermined rule;
FIG. 8 is an exemplary view illustrating that a mobile terminal according to an embodiment of the present disclosure deletes a picture by corresponding to the user's region selection gesture;
FIG. 9 is an exemplary view illustrating that a mobile terminal according to an embodiment of the present disclosure deletes a picture by corresponding to the user's screen display portion movement gesture;
FIG. 10 is a flow chart illustrating a method of editing pictures in a mobile terminal according to an embodiment of the present disclosure; and
FIG. 11 is a flow chart illustrating a method of editing pictures in a mobile terminal according to another embodiment of the present disclosure.

### DETAILED DESCRIPTION OF THE INVENTION

Embodiments of the present disclosure will be described below in detail with reference to the accompanying drawings, where those components are rendered the same reference number that are the same or are in correspondence, regardless of the figure number, and redundant explanations are omitted. In describing the present disclosure, if a detailed explanation for a related known function or construction is considered to unnecessarily divert the gist of the present disclosure, such explanation has been omitted but would be understood by those skilled in the art. In the following description, usage of suffixes such as 'module', 'part' or 'unit' used for referring to elements is given merely to facilitate explanation of the present disclosure, without having any significant meaning by itself. In describing the present disclosure, if a detailed explanation for a related known function or construction is considered to unnecessarily divert the gist of the present disclosure, such explanation has been omitted but would be understood by those skilled in the art. The accompanying drawings of the present disclosure aim to facilitate understanding of the present disclosure and should not be construed as limited to the accompanying drawings.

### Overall configuration of mobile terminal

The mobile terminal described in the present disclosure may include mobile phones, smart phones, notebook computers, digital broadcast receivers, PDAs (Personal Digital Assistants), PMPs (Portable Multimedia Player), navigation devices, and the like. It would be understood by a person in the art that the configuration according to the embodiments of the present disclosure can be also applicable to the fixed types of terminals such as digital TVs, desk top computers, or the like, except for any elements especially configured for a mobile purpose.

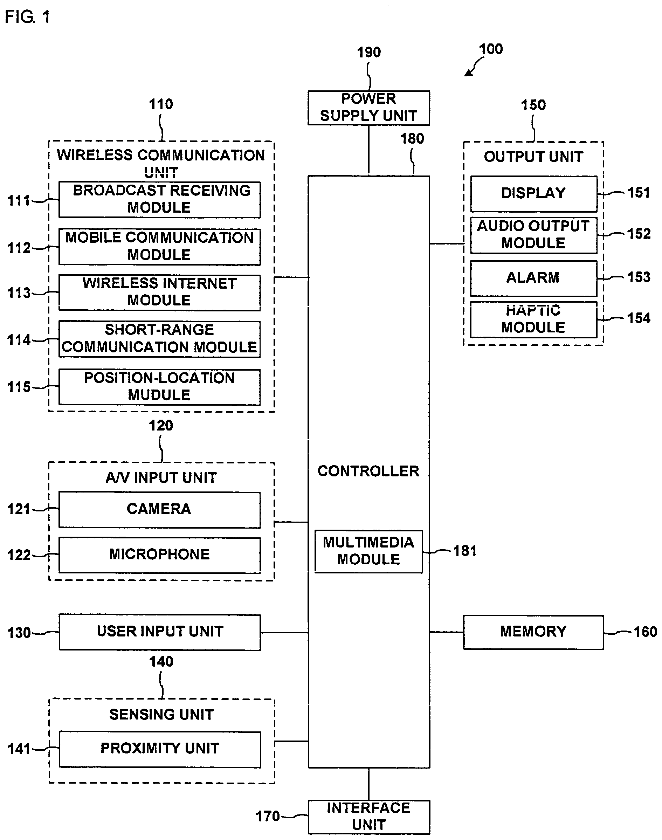

FIG. 1 is a block diagram of a mobile terminal according to an embodiment of the present disclosure.

The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190, and the like. FIG. 1 shows the mobile terminal as having various components, but it should be understood that implementing all of the illustrated components is not a requirement. Greater or fewer components may alternatively be implemented.

The elements of the mobile terminal will be described in detail as follows.

The wireless communication unit 110 typically includes one or more components allowing radio communication between the mobile terminal 100 and a wireless communication system or a network in which the mobile terminal is located. For example, the wireless communication unit 110 may include at least one of a broadcast receiving module 111, a mobile communication module 112, a wireless Internet module 113, a short-range communication module 114, and a position-location module 115.

The broadcast receiving module 111 receives broadcast signals and/or broadcast associated information from an external broadcast management server (or other network entity) via a broadcast channel. The broadcast associated information may refer to information associated with a broadcast channel, a broadcast program or a broadcast service provider. The broadcast associated information may also be provided via a mobile communication network and, in this case, the broadcast associated information may be received by the mobile communication module 112. Broadcast signals and/or broadcast-associated information received via the broadcast receiving module 111 may be stored in the memory 160 (or anther type of storage medium).

The mobile communication module 112 transmits and/or receives radio signals to and/or from at least one of a base station (e.g., access point, Node B, and the like), an external terminal (e.g., other user devices) and a server (or other network entities). Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), LTE (Long Term Evolution), LTE-A (Long Term Evolution Advanced) or the like.

The short-range communication module 114 is a module for supporting short range communications. Some examples of short-range communication technology include Bluetooth™, Radio Frequency IDentification (RFID), Infrared Data Association (IrDA), Ultra-WideBand (UWB), ZigBee™, and the like.

The position-location module 115 is a module for checking or acquiring a location (or position) of the mobile terminal. A typical example of the position-location module is a GPS (Global Positioning System).

With reference to FIG. 1, the A/V input unit 120 receives an audio or image signal. The A/V input unit 120 may include a camera 121 (or other image capture device) or a microphone 122 (or other sound pick-up device). The camera 121 processes image frames of still pictures or video obtained by an image capture device in a video capturing mode or an image capturing mode. The processed image frames may be displayed on a display unit 151 (or other visual output device).

The image frames processed by the camera 121 may be stored in the memory 160 (or other storage medium) or transmitted via the wireless communication unit 110. Two or more cameras 121 may be provided according to the configuration of the mobile terminal.

The microphone 122 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate input data from commands entered by a user to control various operations of the mobile terminal. The user input unit 130 may include a keypad, a dome switch, a touch pad (e.g., a touch sensitive member that detects changes in resistance, pressure, capacitance, and the like, due to being contacted), a jog wheel, a jog switch, and the like.

The sensing unit 140 (or other detection means) detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, and the like, and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity unit 141.

The output unit 150 is configured to provide outputs in a visual, audible, and/or tactile manner (e.g., audio signal, image signal, alarm signal, vibration signal, etc.). The output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (Ul) or a Graphic User Interface (GUI) associated with a call or other communication (such as text messaging, multimedia file downloading, and the like.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, an e-ink display, or the like.

Some of them may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units (or other display means) according to its particular desired embodiment. For example, a plurality of display units may be separately or integrally disposed on one surface of the mobile terminal, or may be separately disposed on mutually different surfaces.

Meanwhile, when the display unit 151 and a sensor (referred to as a 'touch sensor', hereinafter) for detecting a touch operation are overlaid in a layered manner to form a touch screen, the display unit 151 may function as both an input device and an output device. The touch sensor may have a form of a touch film, a touch sheet, a touch pad, and the like.

The touch sensor may convert pressure applied to a particular portion of the display unit 151 or a change in the capacitance or the like generated at a particular portion of the display unit 151 into an electrical input signal. The touch sensor may detect the pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 may recognize which portion of the display unit 151 has been touched.

With reference to FIG. 1, a proximity unit 141 may be disposed within or near the touch screen. The proximity unit 141 is a sensor for detecting the presence or absence of an object relative to a certain detection surface or an object that exists nearby by using the force of electromagnetism or infrared rays without a physical contact. Thus, the proximity unit 141 has a considerably longer life span compared with a contact type sensor, and it can be utilized for various purposes.

Examples of the proximity unit 141 may include a transmission type photoelectric sensor, a direct reflection type photoelectric sensor, a mirror-reflection type photo sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch sensor) may be classified as a proximity unit.

The audio output module 152 may convert and output sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a receiver, a speaker, a buzzer, or other sound generating device.

The alarm unit 153 (or other type of user notification means) may provide outputs to inform about the occurrence of an event of the mobile terminal 100. Typical events may include call reception, message reception, key signal inputs, a touch input etc. In addition to audio or video outputs, the alarm unit 153 may provide outputs in a different manner to inform about the occurrence of an event. For example, the alarm unit 153 may provide an output in the form of vibrations (or other tactile or sensible outputs). When a call, a message, or some other incoming communication is received, the alarm unit 153 may provide tactile outputs (i.e., vibrations) to inform the user thereof. By providing such tactile outputs, the user can recognize the occurrence of various events even if his mobile phone is in the user's pocket. Outputs informing about the occurrence of an event may be also provided via the display unit 151 or the audio output module 152. The display unit 151 and the audio output module 152 may be classified as a part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, and the like, an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or XD memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal 100. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

### Method for processing user input with respect to mobile terminal

The user input units 130 is manipulated to receive a command for controlling the operation of the mobile terminal 100 and may include a plurality of manipulation units 131 and 132. The manipulation units 131 and 132 may be generally referred to as a manipulating portion, and various methods and techniques can be employed for the manipulation portion so long as they can be operated by the user in a tactile manner.

The display unit 151 can display various types of visual information. These information may be displayed in the form of characters, numerals, symbols, graphic or icons. In order to input such information, at least one of the characters, numerals, symbols, graphic and icons may be displayed in predetermined arrangement in the form of a keypad. Also, the keypad can be referred to as a 'soft key'.

The display unit 151 may be operated as an entire area or may be divided into a plurality of regions so as to be operated. In the latter case, the plurality of regions may be configured to be operated in association with each other.

For example, an output window and an input window may be displayed at an upper portion and a lower portion of the display unit 151. The output window and the input window are regions allocated to output or input information, respectively. Soft keys marked by numbers for inputting a phone number or the like may be outputted to the input window. When a soft key is touched, a number or the like corresponding to the touched soft key may be displayed on the output window. When the manipulation unit is manipulated, a call connection to the phone number displayed on the output window may be attempted or text displayed on the output window may be inputted to an application.

The display unit 151 or a touch pad may be configured to receive a touch through scrolling. The user can move an entity displayed on the display unit 151, for example, a cursor or a pointer positioned on an icon or the like, by scrolling the touch pad. In addition, when the user moves his finger on the display unit 151 or on the touch pad, a path along which the user's finger moves may be visually displayed on the display unit 151. This can be useful in editing an image displayed on the display unit 151.

A certain function of the terminal may be executed when the display unit 151 (touch screen) and the touch pad are touched together within a certain time range. For example, the display unit 151 and the touch pad may be touched together when the user clamps the terminal body by using his thumb and index fingers. The certain function may be activation or deactivation of the display unit 151 or the touch pad.

Exemplary embodiments related to a control method that can be implemented in the terminal configured as described above will now be described with reference to the accompanying drawings. The exemplary embodiments to be described may be solely used or may be combined to be used. Also, the exemplary embodiments to be described may be combined with the foregoing user interface (UI) so as to be used.

### Method of editing pictures and a terminal using the same method

According to the present disclosure, there is proposed a method capable of effectively managing and editing a plurality of pictures, particularly, a plurality of similar pictures. Here, the plurality of similar pictures may be generated by continuous shooting or capturing, or may be generated by capturing the same object with a plurality of camera lenses.

Hereinafter, a reference picture denotes a picture subject to editing operations, and a compared picture denotes a picture compared around a difference from the reference picture or a picture to which editing operations for the reference picture are applied in a similar manner.

Specifically, a mobile terminal 100 according to an embodiment of the present disclosure may enlarge a reference picture and a compared picture at the same time, or move a screen display portion corresponding to each other at the same time, or perform the same editing operation on the reference picture and the compared picture at the same time. Furthermore, a mobile terminal 100 according to an embodiment of the present disclosure may specify to notify or display a portion in which the compared picture is different from the reference picture.

In addition, a mobile terminal 100 according to an embodiment of the present disclosure may arrange a plurality of pictures according to a predetermined reference, and may change the file names of similar pictures to consecutive file names according to a predetermined reference. Moreover, a mobile terminal 100 according to an embodiment of the present disclosure may delete a picture according to a predetermined gesture input.

On the other hand, the user may select a reference picture and a compared picture from a plurality of pictures, and if the user performs an editing operation on the reference picture as described above, then the mobile terminal may perform the same editing operation on the compared picture. The user may change the reference picture or the compared picture anytime with freedom, and change the reference picture or the compared picture while editing. For example, the user may select a picture having a better image quality from a plurality of pictures as the reference picture.

Furthermore, if the mobile terminal 100 arranges to display a plurality of pictures according to a predetermined reference, then the user may select a reference picture and a compared picture from the arranged pictures. For example, the mobile terminal 100 may classify a plurality of pictures according to similarity into a different set of similar pictures, and arrange to display pictures belonging to any one set of similar pictures from a well-focused picture to a poorly-focused one. Then, the user may select a picture displayed uppermost (i.e., the best-focused picture) as a reference picture, and select a picture displayed subsequently (i.e., a subsequently-focused picture) as a compared picture.

The mobile terminal 100 according to an embodiment of the present disclosure may display a reference picture and a compared picture on divided screens at the same time. For example, the mobile terminal 100 may display a reference picture and a compared picture on a left split screen and a right split screen that are vertically split, respectively, or on an upper split screen and a lower split screen which are horizontally split, respectively.

Here, the mobile terminal 100 may display a reference picture and a compared picture on a plurality of display units 151, respectively, and may divide the screen of one display unit 151 into regions to display a reference picture and a compared picture, respectively. Furthermore, the mobile terminal 100 may display a reference picture and a compared picture on split screens arranged consecutively, or may display the reference picture and the compared picture on split screens separated from one another.

The user may select one reference picture and a plurality of compared pictures, and the mobile terminal 100 may display one reference picture and a plurality of compared pictures, or a reference picture and some of a plurality of compared picture on the split screens at the same time. For example, if the user selects one reference picture and three compared pictures, then the mobile terminal 100 may display the reference picture and the compared pictures on four split screens at the same time.

Furthermore, a mobile terminal 100 according to an embodiment of the present disclosure may retrieve part or some of a plurality of pictures stored in the memory 160 to display on a screen, and may change the pictures displayed on the screen according to the user's input. The mobile terminal 100 may generate a thumbnail image of each picture to display on the screen.

In addition, a mobile terminal 100 according to an embodiment of the present disclosure may arrange to display a plurality of pictures according to a predetermined reference. Here, the reference may be a picture file name, a picture generation time, a picture modification time, a graphic format, a tag, a memo, a metadata attribute, and the like, or a combination thereof. The user may select or change the reference, and the mobile terminal 100 may rearrange to display the order of a plurality of pictures according to the reference selected or changed by the user.

Hereinafter, for the sake of convenience of explanation, it is assumed that the mobile terminal 100 displays a reference screen and a compared screen on two horizontally split screens, respectively, and arranges to display the maximum three of a plurality of pictures on a screen. However, it should be noted that a configuration in which the mobile terminal 100 displays pictures by horizontally splitting a screen into two or displays the maximum three pictures on a screen is merely presented to describe an embodiment of the present disclosure, but the technical spirit of the present disclosure is not limited to this embodiment.

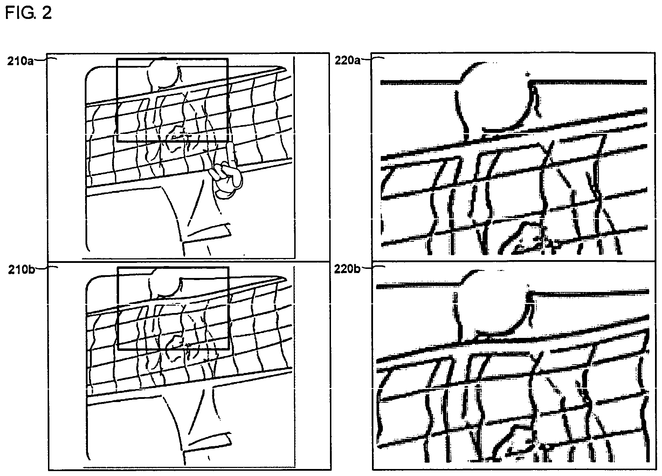

FIG. 2 is an exemplary view illustrating that a mobile terminal according to an embodiment of the present disclosure enlarges a reference picture and a compared picture at the same time.

As illustrated in FIG. 2, the display unit 151 of the mobile terminal 100 may display a reference picture on an upper split screen 210a, and display a compared picture on a lower split screen 210b. If the user selects an enlargement object region on the reference picture displayed on the upper split screen 210a with a drag, a multi-touch, a single-touch in the enlargement mode, or the like, then the controller 180 may enlarge the enlargement object region of the reference picture and a corresponding region of the compared picture to display on an upper split screen 220a and a lower split screen 220b, respectively.

Specifically, if the user selects an enlargement object region on the reference picture, then the user input unit 130 or the display unit 151 (touch screen) may transfer input data corresponding to the selection of the enlargement object region on the reference picture to the controller 180, and the controller 180 may acquire data specifying the enlargement object region from the input data.

As illustrated in FIG. 2, if the region selection is made of a rectangular shape, then the controller 180 may acquire the X/Y pixel coordinate of an upper left pixel and the X/Y pixel coordinate of a lower right pixel in the rectangular selection region, or acquire the X/Y pixel coordinate of an upper left pixel and the horizontal/vertical lengths thereof.

Though region selection is implemented in a rectangular shape in FIG. 2, the region selection may be implemented in another shape. For example, if the region selection is implemented in any polygonal shape, then the controller 180 may acquire the X/Y pixel coordinates of each vertex in a polygonal selection region from input data. Otherwise, if the region selection is implemented in an oval shape, then the controller 180 may acquire the X/Y pixel coordinates corresponding to two focal points and the lengths of two directrix lines. Otherwise, if the region selection is implemented in a circular shape, then the controller 180 may acquire the X/Y pixel coordinate corresponding to the center of a circle and the length of a radius.

Next, the controller 180 may specify a corresponding enlargement object region in the compared picture using the acquired data. At this time, the controller 180 may specify a region same as the selection region (enlargement object region) of the reference picture as the enlargement object region of the compared picture. Otherwise, the controller 180 may compare (for example, pattern matching) the selection region (enlargement object region) of the reference picture with the compared picture, and specify a region most similar to the selection region (enlargement object region) of the reference picture in the compared picture as the enlargement object region of the compared picture.

If the enlargement object region of the compared picture is specified, then the controller 180 may enlarge the enlargement object region of the reference picture to display on the upper split screen 220a, and also enlarge the enlargement object region of the compared picture to display on the lower split screen 220b.

At this time, in order to enlarge each enlargement object region to display on a split screen, the controller 180 may perform resampling operation. For example, the resampling operation may be performed by a bicubic interpolation, a bilinear interpolation, nearest neighbor interpolation, and the like.

In the above, it has been described a case where the reference picture and the compared picture are enlarged-displayed, but a case where the reference picture and the compared picture are reduced-displayed can be similarly understood as described above, and thus the detailed description thereof will be omitted.

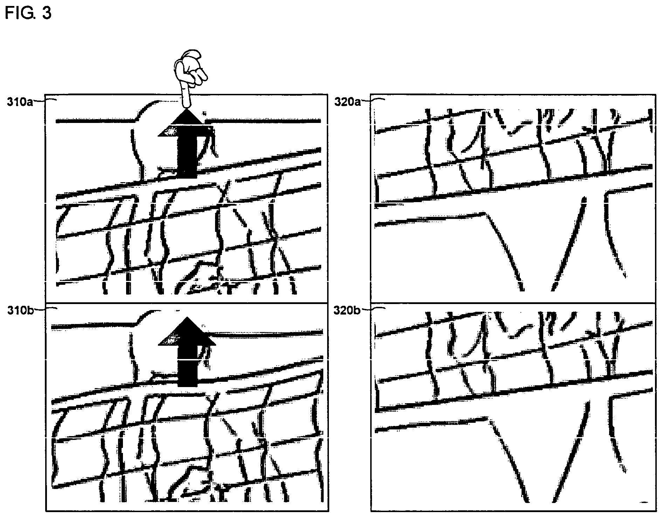

FIG. 3 is an exemplary view illustrating that a mobile terminal according to an embodiment of the present disclosure moves a screen display portion of a reference picture and a compared picture at the same time.

As illustrated in FIG. 3, the display unit 151 of the mobile terminal 100 may display part of the reference picture on an upper split screen 310a, and display part of the compared picture on a lower split screen 310b. If the user moves a screen display portion with a drag, a multi-touch, a single-touch in the screen display portion movement mode or the like on the reference picture displayed on the upper split screen 310a, then the controller 180 may display the moved screen display portion of the reference picture and a correspondingly moved region of the compared picture on an upper split screen 320a and a lower split screen 320b, respectively.

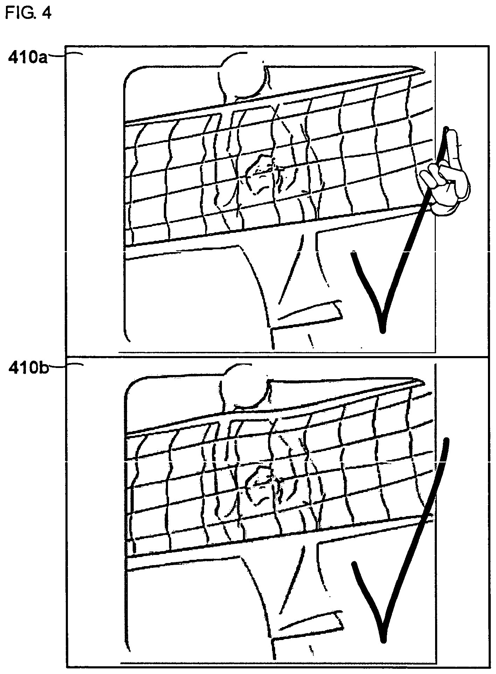

FIG. 4 is an exemplary view illustrating that a mobile terminal according to an embodiment of the present disclosure performs the same editing operation for a reference picture and a compared picture at the same time.

As illustrated in FIG. 4, the display unit 151 of the mobile terminal 100 may display a reference picture on an upper split screen 410a, and display a compared picture on a lower split screen 410b. If the user performs an editing operation (line drawing in FIG. 4) on the reference picture displayed on the upper split screen 410a, then the controller 180 may also perform the same editing operation on the compared picture displayed on the lower split screen 410b.

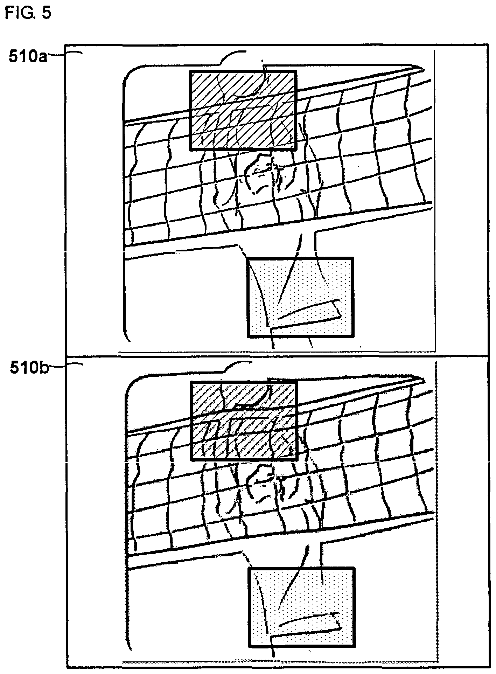

FIG. 5 is an exemplary view illustrating that a mobile terminal according to an embodiment of the present disclosure specifies a portion in which a compared picture is different from a reference picture.

As illustrated in FIG. 5, the display unit 151 of the mobile terminal 100 may display a reference picture on an upper split screen 510a, and display a compared picture on a lower split screen 510b. According to the user's command, the controller 180 may specify to notify or discernibly display a portion where the compared picture is different from the reference picture using an image processing technique (which is displayed with a shade in the black-border rectangle in FIG. 5).

Here, the image processing method may be an edge detection technique, a vector image conversion technique, an image block characteristic extraction technique, a technique using the shape, texture, and the like of an object, a technique using a wavelet coefficient extracted using a wavelet transformation function, a technique using a color histogram, and the like, or a combination thereof.

The controller 180 may discernibly display a portion where the compared picture is different from the reference picture (with a selection region display and a shade display in FIG. 5). For example, the controller 180 may discernibly display a portion where the compared picture is different from the reference picture with an arrow, a color, a shade, a conversion, a selection region display, or the like.

Furthermore, the controller 180 may discernibly display a portion having a large difference and a portion having a small difference. In FIG. 5, the controller 180 discernibly displays two portions having a difference, wherein the portion having a large difference is displayed using a thicker shade compared to the portion having a small difference. For example, the controller 180 may display the portion having a large difference with a thicker shade, a thinner shade, a lighter shade, a darker shade, a more noticeable color, or the like, compared to the portion having a small difference.

The user may set up the number of different portions to be displayed on the screen, and the controller 180 may display the portions as many as the set number in the order of the portion having a large difference among the found portions having a difference.

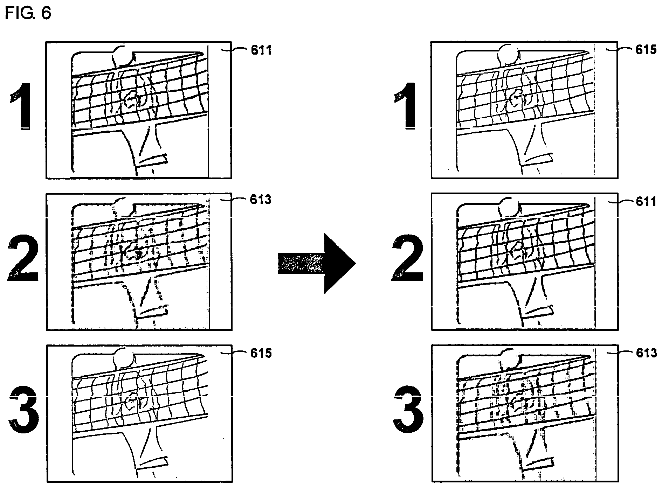

FIG. 6 is an exemplary view illustrating that a mobile terminal according to an embodiment of the present disclosure arranges to display a plurality of pictures according to a predetermined reference.

The display unit 151 of the mobile terminal 100 may display a plurality of pictures 611, 613, 615 in a predetermined order or in any order. Otherwise, according to the user's command, the controller 180 may arrange to display a plurality of pictures 611, 613, 615 according to a predetermined reference. For example, the user may select and drag-and-drop any one picture of the plurality of pictures to change the order of pictures.

The predetermined reference may be an order with a well-focused picture, a high-quality picture, a light picture, or a combination thereof. The user may set up the predetermined reference or an arrangement order according to the predetermined reference (for example, from a well-focused picture to a poor-focused picture).

The controller 180 may determine the grade of each picture according to the predetermined reference using an image processing technique. For example, the controller 180 may calculate the contrast of contour lines of an object, thereby determining a well-focused one as the contrast becomes large. Otherwise, the controller 180 may determines a well-focused one as a lot of high frequency components are shown on the basis of an object shown in the picture. Otherwise, the controller 180 may determine a high-quality one in case where color histogram of the picture is widely distributed.

Referring to FIG. 6, the controller 180 may display a plurality of pictures 611, 613, 615 by changing them from an initially displayed order (611-613-615) to an order (615-611-613) in which a well-focused picture is shown in the upper side thereof.

On the other hand, the controller 180 may retrieve a similar one from the plurality of pictures stored in the memory 160. For example, the controller 180 may retrieve similar pictures from the plurality of pictures stored in the memory 160 prior to performing the foregoing arrangement operation, and then perform the foregoing arrangement operation with respect to the retrieved similar pictures.

In order to retrieve similar pictures, the controller 180 may perform an available similarity measurement technique. For a similarity measurement technique for measuring similarity between two pictures, there are a method of using a color histogram, a method of generating to compare a color index together with a spatially weak constraint, a method of using the color of a dominant region, and the like.

Specifically, the method of using a color histogram is a method of calculating the number of colors distributed in each image to determine an image with the most similar number of colors as a similar image. The color indexing method including a spatially weak constraint is a method of discerning an important portion in two images, and then performing indexing into a scalar value such as color average or variation for each region to compare two pictures. The dominant color region based image retrieval method is a method of comparing pictures using a correlation similar to a method of allowing a person to recognize an image.

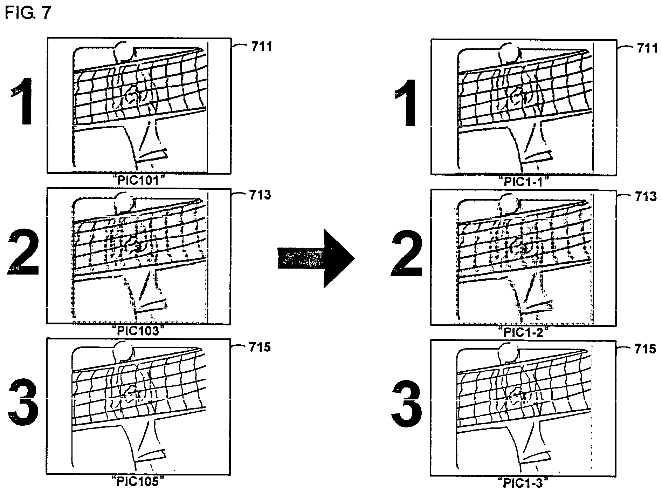

FIG. 7 is an exemplary view illustrating that a mobile terminal according to an embodiment of the present disclosure changes the names of a plurality of pictures according to a predetermined rule.

The display unit 151 of the mobile terminal 100 may display a plurality of pictures 711, 713, 715 in a predetermined order or in any order. According to the user's command, the controller 180 may change the names of the plurality of pictures 711, 713, 715 according to a certain reference or a predetermined rule. For example, the user may select and drag-and-drop any one picture of the plurality of pictures to change the order of pictures. Otherwise, the controller 180 may change the name of a picture to a name to be inputted by the user.

As illustrated in FIG. 7, the controller 180 may change the names of pictures 711, 713, 715 whose names are "PIC101", "PIC103, and "PIC105" respectively to consecutive names starting with "PIC1-" such as "PIC1-1" PIC1-2", and PIC1-3".

In FIG. 7, though it is illustrated an example in which the picture names are changed to consecutive names having a same prefix, the picture names may be changed to another form. For example, the controller 180 may change the names of the plurality of pictures to consecutive numbers such as "1001", "1002", "1003" and the like. Otherwise, the controller 180 may change the names of the plurality of pictures to consecutive numbers associated with GPS location information such as "longitude#1.latitude#1.1001", "longitude#1.latitude#1.1002", "longitude#1.latitude#1.1003", "longitude#2.latitude#2.1001", "longitude#2. latitude#2.1002", "longitude#3.latitude#3.1001", and the like. Otherwise, the controller 180 may change the names of the plurality of pictures to consecutive numbers combined with predetermined location information in association with GPS location information such as "location#1.1001", "location#1.1002", "location#1.1003", "location#2.1001", "location#2.1002", "location#3.1001", and the like.

On the other hand, the controller 180 may retrieve similar pictures from the plurality of pictures stored in the memory 160 as described above. For example, the controller 180 may retrieve similar pictures from the plurality of pictures stored in the memory 160 prior to performing the foregoing name change operation, and then change the names to discern from one another for each of the retrieved similar pictures group.

As illustrated in FIG. 7, the controller 180 may change the names of similar pictures 711, 713, 715 whose names are "PIC101", "PIC103", and "PIC105" respectively to consecutive names starting with "PIC1-" such as "PIC1-1", "PIC1-2", and "PIC1-3". Though not shown in FIG. 7, the controller 180 may change the names of other similar pictures which are not similar to "PIC101", "PIC103", and "PIC105" to consecutive names starting with "PIC2-".

On the other hand, if the user deletes some of the pictures managed with consecutive names, then the controller 180 may change the names of remaining pictures to consecutive names automatically without the user's command or according to the user's command. For example, if there are pictures whose names are "PIC1-1", "PIC1-2", and "PIC1-3" respectively, and the user deletes a picture "PIC1-2" among them, then the controller 180 may change the name of the picture "PIC1-3" to "PIC1-2" to be a consecutive name.

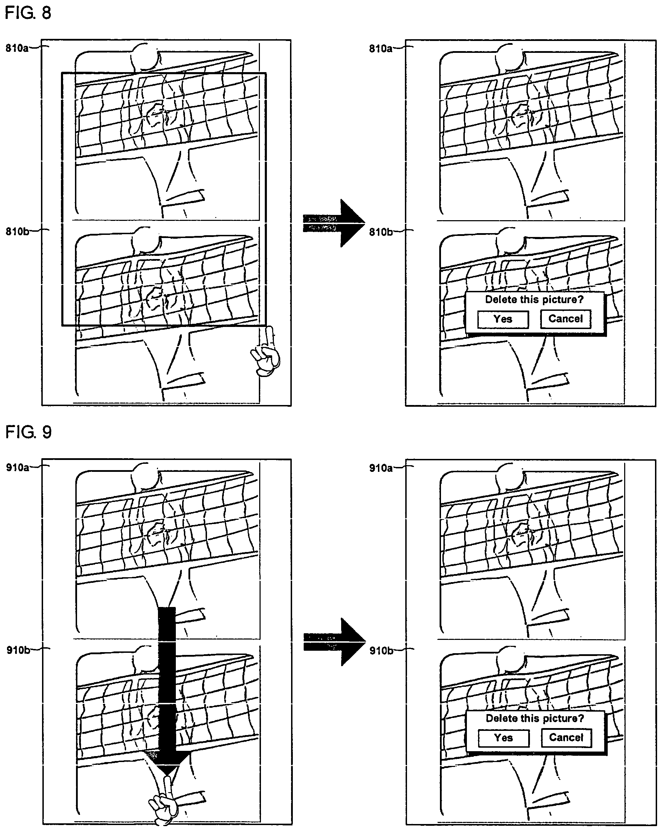

FIG. 8 is an exemplary view illustrating that a mobile terminal according to an embodiment of the present disclosure deletes a picture by corresponding to the user's region selection gesture.

As illustrated in FIG. 8, the display unit 151 of the mobile terminal 100 may display a reference picture on an upper split screen 810a, and display a compared picture on a lower split screen 810b. If the user selects a region up to the compared picture displayed on the lower split screen 810b by exceeding the reference picture displayed on the upper split screen 810a with a drag, a multi-touch, a single-touch, or the like, then the controller 180 may immediately delete the compared picture or delete it through the user's confirmation (a message window for asking whether to delete is displayed in FIG. 8).

Here, there may exist a condition for determining whether to perform a picture delete operation when region selection is performed up to which region of the compared picture, and the controller 180 may store a user setup for such a condition in the memory 160, and then use it to determine whether the condition is satisfied. For example, the condition may be a condition that region selection is started from any one point in the reference picture and more than 50% of the compared picture is region-selected. Otherwise, the condition may be a condition of selecting a region above a horizontal or vertical line dividing the compared picture in halves.

Though not shown in FIG. 8, the controller 180 may select another picture as a compared picture if the compared picture is deleted. For example, the controller 180 may display a selection window for allowing the user to select another compared picture. Otherwise, the controller 180 may select a picture most similar to the reference picture or the deleted compared picture as a compared picture.

Though it has been described a case where a compared picture is deleted by corresponding to the user's region selection gesture in the above, a case of deleting a reference picture may be similarly understood. In other words, if the user selects a region up to the reference picture displayed on the upper split screen 810a by exceeding the compared picture displayed on the lower split screen 810b with a drag, a multi-touch, a single-touch, or the like, then the controller 180 may immediately delete the reference picture or delete it through the user's confirmation.

FIG. 9 is an exemplary view illustrating that a mobile terminal according to an embodiment of the present disclosure deletes a picture by corresponding to the user's screen display portion movement gesture.

As illustrated in FIG. 9, the display unit 151 of the mobile terminal 100 may display a reference picture on an upper split screen 910a, and display a compared picture on a lower split screen 910b. If the user performs a touch input up to the compared picture displayed on the lower split screen 910b by exceeding the reference picture displayed on the upper split screen 910a with a drag, a flick, a multi-touch, a single-touch in the enlargement mode, or the like, then the controller 180 may immediately delete the compared picture or delete it through the user's confirmation (a message window for asking whether to delete is displayed in FIG. 9).

Here, there may exist a condition for determining whether to perform a picture delete operation when a touch input is performed up to which region of the compared picture, and the controller 180 may store a user setup for such a condition in the memory 160, and then use it to determine whether the condition is satisfied. For example, the condition may be a condition of dragging above a horizontal or vertical line dividing the compared picture in halves.

The configuration in which another compared picture is selected or the configuration in which a reference picture is deleted can be similarly understood as described with reference to FIG. 8, and thus the detailed description thereof will be omitted.

The present disclosure may be also applicable to a case of managing a plurality of similar pictures generated by capturing the same object with a plurality of camera lenses. For example, according to the present disclosure, two pictures generated by capturing the same object with two camera lenses at the same time may be simultaneously displayed, or a picture having a lower-quality image of the two pictures is automatically deleted, or a picture may be deleted according to the user's selection.

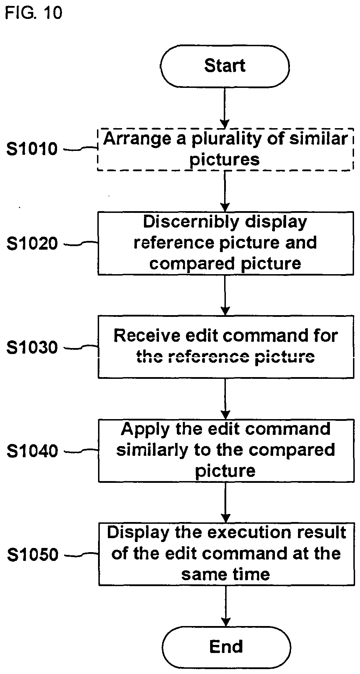

FIG. 10 is a flow chart illustrating a method of editing pictures in a mobile terminal according to an embodiment of the present disclosure.

Referring to FIG. 10, first, the mobile terminal 100 may arrange a plurality of similar pictures (S1010).

Then, the mobile terminal 100 may discernibly display the plurality of similar pictures with reference pictures and compared pictures (S1020).

Here, the plurality of similar pictures may be pictures obtained by continuously capturing the same object with one camera lens or pictures obtained by simultaneously capturing the same object with a plurality of camera lenses (for example, a plurality of camera lenses for the purpose of capturing a 3-dimensional image). The reference pictures and compared pictures can be changed, added, or deleted according to the user's input prior to editing or while editing.

At this time, the mobile terminal 100 may display a plurality of similar pictures in the form of a horizontal list or a vertical list. For example, the mobile terminal 100 may display all or part of the plurality of similar pictures with a horizontal arrangement, a vertical arrangement, or a grid arrangement.

In particular, the mobile terminal 100 may display a plurality of similar pictures in divided screens, and the number of the divided screens may be determined according to the number of the plurality of similar pictures.

Furthermore, the mobile terminal 100 may arrange to display a plurality of similar pictures according to the picture quality (for example, well-focused level of a picture, uniform distribution of a color histogram) or the priority set by the user.

On the other hand, the mobile terminal 100 may manage a plurality of similar pictures with similar numbers or similar names. For this purpose, the mobile terminal 100 may check whether there is a change in the plurality of similar pictures stored in the memory 160 according to the user's command or a predetermined period of time, and then reflect them if there is any change and rearrange the plurality of similar pictures with similar numbers or similar names.

For example, if a plurality of similar pictures including reference pictures and compared pictures are changed, added, or deleted according to the user's input, then the mobile terminal 100 may rearrange the plurality of similar pictures with consecutive numbers or consecutive names.

Then, the mobile terminal 100 receives an edit command with respect to the displayed reference picture (S1030). The mobile terminal 100 edits the reference picture according to the received edit command. The edit command may be entered by a touch input, a key input, or a gesture input, and include enlargement, reduction, movement, deletion or difference display commands.

For example, if the user enters a drag input starting from the reference picture and ending at the compared picture, then the mobile terminal may display a delete confirmation message, and then delete or not delete the compared picture according to the user's response.

Then, the mobile terminal 100 applies the received edit command similarly to the compared picture (S1040). Then, the mobile terminal 100 may display the execution result of the edit command for the reference picture and the compared picture at the same time (S1050).

A method of editing pictures in a mobile terminal according to an embodiment of the present disclosure may be understood similarly to a terminal that has been described according to the foregoing embodiment of the present disclosure with reference to FIGS. 1 through 9, and the detailed description will be omitted below.

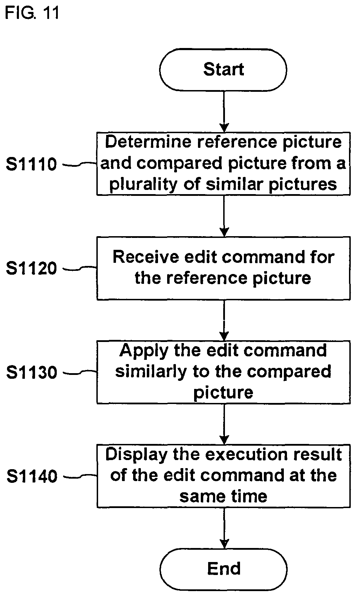

FIG. 11 is a flow chart illustrating a method of editing pictures in a mobile terminal according to another embodiment of the present disclosure.

Referring to FIG. 11, first, the mobile terminal 100 determines a reference picture and a compared picture from a plurality of similar pictures according to the user's input or selection (S1110). Then, the mobile terminal 100 receives an edit command with respect to the displayed reference picture (S1120). Then, the mobile terminal 100 applies the received input command similarly to the compared picture (S1130). Then, the mobile terminal 100 may display the execution result of the edit command for the reference picture and the compared picture at the same time (S1140).

A method of editing pictures in a mobile terminal according to another embodiment of the present disclosure may be understood similarly to a method of editing pictures in a mobile terminal that has been described according to the foregoing embodiment of the present disclosure and a terminal that has been described according to the foregoing embodiment of the present disclosure with reference to FIGS. 1 through 10, and the detailed description will be omitted below.

Furthermore, according to an embodiment of the present disclosure, the foregoing method may be implemented as codes readable by a computer on a medium written by the program. Examples of the computer-readable media may include ROM, RAM, CD-ROM, magnetic tape, floppy disk, and optical data storage device, and the like, and also include a device implemented via a carrier wave (for example, a transmission via the Internet).

The configurations and methods according to the above-described embodiments will not be applicable in a limited way to the foregoing mobile terminal, and all or part of each embodiment may be selectively combined and configured to make various modifications thereto.

As described above, preferred embodiments of the present disclosure have been described with reference to the accompanying drawings.

## Claims

1. A method of a mobile communication terminal comprising:
continuously capturing a plurality of similar images comprising a first image and a second image;
**characterized in that** the method further comprises
arranging (S1010) the plurality of similar images comprising the first image and the second image according to a picture quality grade of each similar image in the plurality of similar images, wherein the picture quality grade of said each similar image in the plurality of similar images is determined based on a degree of focus of said each similar image using an image processing technique;
displaying (S1020) the plurality of similar images according to the picture quality grade of said each similar image, wherein the first image of the highest picture quality grade displayed on an upper split screen is selected as a reference picture and a plurality of images of a lower picture quality comprising the second image displayed on a lower split screen of the mobile communication terminal are selected as compared pictures, and wherein a portion where each of the compared pictures is different from the reference picture is discernably displayed; and simultaneously performing (S1040) an edit operation on said each of the compared pictures displayed on the screen in response to a user input applied on the reference picture causing the edit operation on the reference picture.

2. The method of claim 1, wherein the performing (S1040) the edit operation includes:
enlarging the area of the first image and enlarging an area of the second image which corresponds to the area of the first image based on the user input with respect to the first image;
moving the area of the first image and moving the area of the second image based on the user input with respect to the first image; and
highlighting the area of the first image and highlighting the area of the second image.

3. The method of claim 1, further comprising:
deleting one of the first image or the second image displayed on the screen in response to a user input.

4. The method of claim 1, further comprising:
providing identifiers for the first image and the second image displayed on the screen based on the picture quality grade of said each similar image.

5. The method of claim 1, further comprising:
providing identifiers for the first image and the second image based on a time gap between the first image and the second image.

6. A mobile communication terminal (100), comprising:
a camera (121) to continuously capture a plurality of similar images comprising a first image and a second image; and
a display (151) ;
**characterized in that** the mobile communication terminal further comprises a controller (180) configured to:
arrange the plurality of similar images comprising the first image and the second image according to a picture quality grade of each similar image in the plurality of similar images, wherein the picture quality grade of said each similar image in the plurality of similar images is determined based on a degree of focus of said each similar image using an image processing technique;
display the plurality of similar images according to the picture quality grade of said each similar image, wherein the first image of the highest picture quality grade displayed on an upper split screen is selected as a reference picture and a plurality of images comprising the second image displayed on a lower split screen of the mobile communication terminal are selected as compared pictures, and wherein a portion where each of the compared pictures is different from the reference picture is discernably displayed; and
simultaneously perform an edit operation on said each of the compared pictures displayed on the screen in response to a user input applied on the reference picture which causes the edit operation on the reference picture.

7. The mobile communication terminal (100) of claim 6, wherein the controller (180) deletes one of the first image or the second image displayed on the screen based on a user input.

8. The mobile communication terminal (100) of claim 6, wherein the controller (180) provides identifiers for the first image and the second image displayed on the screen based on the picture quality grade of said each similar image.

9. The mobile communication terminal (100) of claim 6, wherein the controller (180) provides identifiers for the first image and the second image based on a time gap between the first image and the second image.

## Patentansprüche

1. Verfahren für ein mobiles Kommunikationsendgerät, das Folgendes umfasst:
kontinuierliches Aufnehmen mehrerer ähnlicher Bilder, die ein erstes Bild und ein zweites Bild umfassen;
**dadurch gekennzeichnet, dass** das Verfahren ferner umfasst:
Anordnen (S1010) der mehreren ähnlichen Bilder, die das erste Bild und das zweite Bild umfassen, gemäß einem Bildqualitätsgrad jedes ähnlichen Bildes in den mehreren ähnlichen Bildern, wobei der Bildqualitätsgrad jedes ähnlichen Bildes in den mehreren ähnlichen Bildern anhand eines Bildschärfegrads jedes ähnlichen Bildes unter Verwendung einer Bildverarbeitungstechnik bestimmt wird;
Anzeigen (S1020) der mehreren ähnlichen Bilder gemäß dem Bildqualitätsgrad jedes ähnlichen Bildes, wobei das erste Bild des höchsten Bildqualitätsgrads, das auf einem oberen geteilten Bildschirm angezeigt wird, als ein Referenzbild ausgewählt wird und mehrere Bilder einer niedrigeren Bildqualität, die das zweite Bild umfassen und auf einem unteren geteilten Bildschirm des mobilen Kommunikationsendgeräts angezeigt werden, als verglichene Bilder ausgewählt werden und wobei ein Teil, in dem jedes der verglichenen Bilder von dem Referenzbild verschieden ist, wahrnehmbar angezeigt wird; und gleichzeitiges Ausführen (S1040) eines Editiervorgangs an jedem der verglichenen Bilder, die auf dem Bildschirm angezeigt werden, als Reaktion auf eine Anwendereingabe, die an dem Referenzbild ausgeübt wird und die den Editiervorgang an dem Referenzbild bewirkt.

2. Verfahren nach Anspruch 1, wobei das Ausführen (S1040) des Editiervorgangs enthält:
Vergrößern des Bereichs des ersten Bildes und Vergrößern eines Bereichs des zweiten Bildes, der dem Bereich des ersten Bildes entspricht, anhand der Anwendereingabe in Bezug auf das erste Bild;
Bewegen des Bereichs des ersten Bildes und Bewegen des Bereichs des zweiten Bildes anhand der Anwendereingabe in Bezug auf das erste Bild; und
Hervorheben des Bereichs des ersten Bildes und Hervorheben des Bereichs des zweiten Bilds.

3. Verfahren nach Anspruch 1, das ferner Folgendes umfasst:
Löschen des ersten Bildes oder des zweiten Bildes, die auf dem Bildschirm angezeigt werden, als Reaktion auf eine Anwendereingabe.

4. Verfahren nach Anspruch 1, das ferner Folgendes umfasst:
Bereitstellen von Kennungen für das erste Bild und das zweite Bild, die auf dem Bildschirm angezeigt werden, anhand des Bildqualitätsgrads jedes ähnlichen Bilds.

5. Verfahren nach Anspruch 1, das ferner Folgendes umfasst:
Bereitstellen von Kennungen für das erste Bild und das zweite Bild anhand einer Zeitlücke zwischen dem ersten Bild und dem zweiten Bild.

6. Mobiles Kommunikationsendgerät (100), das Folgendes umfasst:
eine Kamera (121), um kontinuierlich mehrere ähnliche Bilder aufzunehmen, die ein erstes Bild und ein zweites Bild umfassen; und
eine Anzeige (151);
**dadurch gekennzeichnet, dass** das mobile Kommunikationsendgerät ferner Folgendes umfasst:
eine Steuereinheit (180), die konfiguriert ist zum:
Anordnen der mehreren ähnlichen Bilder, die das erste Bild und das zweite Bild umfassen, gemäß einem Bildqualitätsgrad jedes ähnlichen Bildes in den mehreren ähnlichen Bildern, wobei der Bildqualitätsgrad jedes ähnlichen Bildes in den mehreren ähnlichen Bildern anhand eines Bildschärfegrads jedes ähnlichen Bildes unter Verwendung einer Bildverarbeitungstechnik bestimmt wird;
Anzeigen (S1020) der mehreren ähnlichen Bilder gemäß dem Bildqualitätsgrad jedes ähnlichen Bildes, wobei das erste Bild des höchsten Bildqualitätsgrads, das auf einem oberen geteilten Bildschirm angezeigt wird, als ein Referenzbild ausgewählt wird und mehrere Bilder, die das zweite Bild umfassen und auf einem unteren geteilten Bildschirm des mobilen Kommunikationsendgeräts angezeigt werden, als verglichene Bilder ausgewählt werden und wobei ein Teil, wo jedes der verglichenen Bilder von dem Referenzbild verschieden ist, wahrnehmbar angezeigt wird; und
gleichzeitigen Ausführen eines Editiervorgangs an jedem der verglichenen Bilder, die auf dem Bildschirm angezeigt werden, als Reaktion auf eine Anwendereingabe, die an dem Referenzbild ausgeübt wird und die den Editiervorgang an dem Referenzbild bewirkt.

7. Mobiles Kommunikationsendgerät (100) nach Anspruch 6, wobei die Steuereinheit (180) das erste Bild oder das zweite Bild, die auf dem Bildschirm angezeigt werden, anhand einer Anwendereingabe löscht.

8. Mobiles Kommunikationsendgerät (100) nach Anspruch 6, wobei die Steuereinheit Kennungen für das erste Bild und das zweite Bild, die auf dem Bildschirm angezeigt werden, anhand des Bildqualitätsgrads jedes ähnlichen Bildes bereitstellt.

9. Mobiles Kommunikationsendgerät (100) nach Anspruch 6, wobei die Steuereinheit (180) Kennungen für das erste Bild und das zweite Bild anhand einer Zeitlücke zwischen dem ersten Bild und dem zweiten Bild bereitstellt.

## Revendications

1. Procédé d'un terminal de communication mobile comprenant :
l'acquisition continue d'une pluralité d'images similaires comprenant une première image et une deuxième image ;
**caractérisé en ce que** le procédé comprend en outre :
l'agencement (S1010) de la pluralité d'images similaires comprenant la première image et la deuxième image en fonction d'une note de qualité d'image de chaque image similaire dans la pluralité d'images similaires, dans lequel la note de qualité d'image de ladite chaque image similaire dans la pluralité d'images similaires est déterminée sur la base d'un degré de mise au point de ladite chaque image similaire en utilisant une technique de traitement d'image ;
l'affichage (S1020) de la pluralité d'images similaires en fonction de la note de qualité d'image de ladite chaque image similaire, dans lequel la première image ayant la plus grande note de qualité d'image affichée sur un écran partagé supérieur est sélectionnée en tant qu'image de référence et une pluralité d'images ayant une qualité d'image inférieure comprenant la deuxième image affichée sur un écran partagé inférieur du terminal de communication mobile sont sélectionnées en tant qu'images comparées, et dans lequel une portion dans laquelle chacune des images comparées est différente de l'image de référence est affichée de manière discernable ; et
l'exécution simultanée (S1040) d'une opération de modification sur ladite chacune des images comparées affichées sur l'écran en réponse à une entrée d'utilisateur appliquée sur l'image de référence provoquant l'opération de modification sur l'image de référence.

2. Procédé selon la revendication 1, dans lequel l'exécution (S1040) de l'opération de modification inclut :
l'agrandissement de la zone de la première image et l'agrandissement d'une zone de la deuxième image qui correspond à la zone de la première image sur la base de l'entrée d'utilisateur par rapport à la première image ;
le déplacement de la zone de la première image et le déplacement de la zone de la deuxième image sur la base de l'entrée d'utilisateur par rapport à la première image ; et
la mise en surbrillance de la zone de la première image et la mise en surbrillance de la zone de la deuxième image.

3. Procédé selon la revendication 1, comprenant en outre :
la suppression de l'une de la première image ou de la deuxième image affichée sur l'écran en réponse à une entrée d'utilisateur.

4. Procédé selon la revendication 1, comprenant en outre :
la fourniture d'identifiants pour la première image et la deuxième image affichées sur l'écran sur la base de la note de qualité d'image de ladite chaque image similaire.

5. Procédé selon la revendication 1, comprenant en outre :
la fourniture d'identifiants pour la première image et la deuxième image sur la base d'un laps de temps entre la première image et la deuxième image.

6. Terminal de communication mobile (100), comprenant :
une caméra (121) pour effectuer l'acquisition continue d'une pluralité d'images similaires comprenant une première image et une deuxième image ; et
un affichage (151) ;
**caractérisé en ce que** le terminal de communication mobile comprend en outre :
un organe de commande (180) configuré pour effectuer :
l'agencement de la pluralité d'images similaires comprenant la première image et la deuxième image en fonction d'une note de qualité d'image de chaque image similaire dans la pluralité d'images similaires, dans lequel la note de qualité d'image de ladite chaque image similaire dans la pluralité d'images similaires est déterminée sur la base d'un degré de mise au point de ladite chaque image similaire en utilisant une technique de traitement d'image ;
l'affichage de la pluralité d'images similaires en fonction de la note de qualité d'image de ladite chaque image similaire, dans lequel la première image ayant la plus grande note de qualité d'image affichée sur un écran partagé supérieur est sélectionnée en tant qu'image de référence et une pluralité d'images comprenant la deuxième image affichée sur un écran partagé inférieur du terminal de communication mobile sont sélectionnées en tant qu'images comparées, et dans lequel une portion dans laquelle chacune des images comparées est différente de l'image de référence est affichée de manière discernable ; et
l'exécution simultanée d'une opération de modification sur ladite chacune des images comparées affichées sur l'écran en réponse à une entrée d'utilisateur appliquée sur l'image de référence provoquant l'opération de modification sur l'image de référence.

7. Terminal de communication mobile (100) selon la revendication 6, dans lequel l'organe de commande (180) effectue la suppression de l'une de la première image ou de la deuxième image affichée sur l'écran sur la base d'une entrée d'utilisateur.

8. Terminal de communication mobile (100) selon la revendication 6, dans lequel l'organe de commande (180) effectue la fourniture d'identifiants pour la première image et la deuxième image affichées sur l'écran sur la base de la note de qualité d'image de ladite chaque image similaire.

9. Terminal de communication mobile (100) selon la revendication 6, dans lequel l'organe de commande (180) effectue la fourniture d'identifiants pour la première image et la deuxième image sur la base d'un laps de temps entre la première image et la deuxième image.
